# EUROPEAN PATENT APPLICATION

(11) **EP 4 438 551 A1**
(43) Date of publication of application: **02.10.2024**
(21) Application number: 23164957.5
(22) Date of filing: 29.03.2023
(51) Int. Cl.: C01B 3/36, C01B 3/50

(54) **PROCESS AND PLANT FOR PRODUCING SYNTHESIS GAS BY PARTIAL OXIDATION**

(71) Applicant: L'AIR LIQUIDE, SOCIETE ANONYME POUR L'ETUDE ET L'EXPLOITATION DES PROCEDES GEORGES CLAUDE, 75007 Paris (FR)
(72) Inventor: Williams, Bryce, 60439 Frankfurt am Main (DE); Walter, Stefan, 60439 Frankfurt am Main (DE)
(74) Representative: Air Liquide

(57) **Abstract**

The present invention relates to a process and plant for producing a hydrogen- and carbon oxides-comprising synthesis gas by partial oxidation of a carbonaceous feedstock comprising nitrogen compounds. The invention takes advantage of the different solubility of NH₃ and CO₂ as the synthesis gas stream is cooled. Water is condensed continuously throughout the cooling of the synthesis gas stream. NH₃ preferentially dissolves or condenses into the liquid phase during cooling, but at relatively high temperatures, above about 80 to 100 °C. Further condensation at lower temperatures then preferentially dissolves or condenses CO₂ into the liquid phase. Thus, the formation of ammonium salts during cooling of the synthesis gas is prevented.

## Description

### Field of the invention

The invention relates to a process for producing a hydrogen- and carbon oxides-comprising synthesis gas by partial oxidation of a carbonaceous feedstock comprising nitrogen compounds. The invention further relates to a plant for performing the process according to the invention.

### Prior art

Synthesis gases are gas mixtures containing hydrogen and carbon oxides which are used in various synthesis reactions. Examples thereof are methanol synthesis, the production of ammonia by the Haber-Bosch process or Fischer-Tropsch synthesis.

A commonly used process for producing synthesis gases is autothermal entrained flow gasification of gaseous, liquid or solid fuels by partial noncatalytic oxidation with an oxygen-containing oxidant as described for example in patent publication DE 10 2006 059 149 B4. At the top of a reactor an ignition and pilot burner is arranged centrally and a plurality of gasification burners are arranged with rotational symmetry to the reactor axis. Via the gasification burners the fuel with oxygen and steam as gasification agents is supplied to a gasification space of the reactor in which the fuel is converted into synthesis gas. The hot gasification gas exits the gasification space together with the liquid slag and passes into a quench space cooling zone into which water is injected for instantaneous cooling of raw synthesis gas and slag. The water used as quench medium collects in the bottom portion of the quench space as a water bath so that a quench water fill level forms in the lower region of the quench space. The slag is deposited in the water bath and is removed via a slag discharge. The quenched raw synthesis gas is withdrawn from the quench space in a steam-saturated state and purified in subsequent purification stages. Since the fuel is directly reacted with the oxidant, oxidant and fuel are supplied coaxially or coannularly. In a partial oxidation setup, a waste heat boiler can be used instead of a quench. Other configurations are also possible in the state of the art.

Synthesis gas production from carbon-containing feedstocks and in particular, oxygen-based synthesis gas production for the partial oxidation or gasification of carbon-containing feeds with steam is a highly developed field. The resulting synthesis gas mixture of hydrogen (H₂) and carbon monoxide (CO) is accompanied by carbon dioxide (CO₂) and water, as well as other impurities, for example ammonia (NH₃), which are, for example, formed from nitrogen-containing compounds that were present in the feed hydrocarbon.

The unexpected formation of solid compounds from the crude synthesis gas is normally a catastrophic event if it occurs in an operating plant, resulting in physical blockage of equipment. For example, the following nitrogen containing compounds may form: Ammonium bicarbonate, ammonium carbamate, ammonium carbonate, ammonium sesquicarbonate. Given the common cation of these is the ammonium ion, a key variable is often the nitrogen concentration of the feed or the ammonia concentration in the system.

Care is taken during operation but also during the design of such plants to avoid the formation of any solid compounds. These solids are water soluble and could precipitate from solution if the solubility limit of any given salt is breached. From one perspective, if ion concentrations reach too high levels for the operating temperature, solid precipitation will occur. Alternatively, for given ion concentration, precipitation could occur if the temperature of the stream drops too low.

Synthesis gas cooling from a gasification train is typically accomplished with heat recovery equipment to produce steam and pre-heat other process streams. Below a temperature of ca. 200 °C, a large heat load exists for which there is typically no good use. Thus, air coolers are often employed to indirectly cool the synthesis gas against ambient air and condense water and byproducts from the synthesis gas. Such cooling is a necessary first step to remove water from the synthesis gas and allow further purification of the hydrogen by various physical and chemical processes that are known in the art.

Examples of further purification steps include the Rectisol process to remove CO₂ from the hydrogen stream, and methanation of CO to remove trace quantities of CO by conversion to methane. Pressure swing adsorption and membranes can also be used to purify hydrogen from synthesis gas streams.

One strategy to avoid the formation of solids is to perform purification steps on the feedstock prior to gasification. In this manner, nitrogen containing compounds can be removed from the mixture. Thus, the potential for solid nitrogen compounds are correspondingly reduced. Such separations are available but can be expensive to build and operate. Moreover, some carbon-containing feedstocks such as coal and residue cannot be simply purified in order to remove nitrogen compounds at an acceptable cost.

Another strategy is to perform separations of the synthesis gas streams post-gasification by, for example, removing trace components with scrubbing or adsorption steps. Similar to feed pre-treatment, such purification steps are expensive to implement and operate. Though it can be advantageous to have a gas stream for purification, generally, such steps after gasification are more expensive than the purification of the feed because of the higher volume flows.

A further strategy to avoid accumulation of solid-forming compounds in the liquid phase is to purge the critical components from the system. An example is condensate formed when cooling a synthesis gas stream attracts solid-forming compounds, such as ammonia, and CO₂, which dissolve into the condensed water. Removing the condensate from the system and stripping ammonia, for example, is practised to clean-up the water. Stripped water or additional fresh water can then be reintroduced to the plant to replace the purged condensate and maintain water balance. This is a conventional solution but requires the additional stripping step to clean the purged condensate and can also result in higher water and energy usage.

For cooling of raw synthesis gases, air cooled heat exchangers or air coolers operate by allowing ambient air to flow past rows of process piping to indirectly cool and condense the process gases inside. The pipes are arranged in bays, often with headers on either side to distribute hot fluid across the tubes or collect the combined cooled effluent into a common pipe. Such cooling pipes or tubes are typically 20 to 50 mm in diameter and use fins to improve heat transfer. Fans are used, either forced or induced draft which are, respectively, below or above the tubes, to improve the heat transfer. Multiple passes of the process stream are made to reduce the plot space of the air cooler and take better advantage of the temperature difference between the cooling curve of the process stream and the heating curve of the ambient air.

The process temperature exiting the air cooler can be dynamically controlled by adjusting the number or speed of fans in operation or by adjust dampers to modulate the air flow. Alternatively, the temperature can also be controlled by bypassing a portion of the process fluid. Combinations of these methods are also possible.

In colder climates, measures must be taken to prevent over cooling of the process (e.g. too low temperature). This can include building enclosures around the heat exchange tubes with dampers that can be adjusted. In extreme conditions, heaters must be used to provide freeze protection. In such conditions where winterization measures are not perfect, a portion of the air cooler tubes could be exposed to local temperatures much lower than the targeted, mixed outlet temperature of the heat exchanger.

There is generally a need to further improve the methods to avoid solids formation in gasification processes that avoid the additional costs associated with the above-mentioned solutions.

### Description of the invention

The present invention accordingly has for its object to propose a process for producing synthesis gas by gasification of carbon-containing fuels where the above mentioned disadvantages are avoided.

This object is achieved in a first aspect of the invention by a process having the features of claim 1, and in a ninth aspect of the invention by a plant having the features of claim 9. Further aspects of the process according to the invention are discernible from the particular embodiments according to the dependent process or plant claims.

Partial oxidation conditions/gasification conditions are to be understood as meaning the reaction and process conditions known per se to a person skilled in the art, in particular of temperature, pressure and residence time, as discussed in detail in the relevant literature and under which at least partial conversion but preferably industrially relevant conversions of the reactants into synthesis gas products such as CO and hydrogen are effected.

Noncatalytic partial oxidation reactors are to be understood as meaning especially reaction apparatuses such as are described in the textbook "Gasification", C. Higman, M. van der Burgt, Gulf Professional Publishing, Elsevier (2003), Chapter 5.3 "Entrained-flow Gasifiers" and Chapter 5.4 "Oil Gasification and Partial Oxidation of Natural Gas". These have in common that the reaction of the input streams with an oxygen-containing oxidant is effected in a reaction chamber having one or more burners which have arranged downstream of them a cooling zone often configured as a quench chamber. The reaction chamber consists substantially of a refractory lined or endowed empty space whose walls are in some embodiments cooled and which especially contains no solid catalyst to promote the partial oxidation reactions.

Fluid connection between two regions or plant components is to be understood here as meaning any kind of connection that enables flow of a fluid, for example a reaction product or a hydrocarbon fraction, from one to the other of the two regions, irrespective of any interposed regions, components or required conveying means.

Fluids are to be understood as meaning substances which continually deform and therefore flow under the influence of shear forces. In this context "fluidizable" is to be understood as meaning that finely divided, for example particulate, solids such as dumped beds are brought into a fluid-like state via process engineering measures such as mixing in order that they are conveyable and move together with the fluid phase.

For the purposes of the present invention, a means is something which makes it possible to achieve, or is helpful in achieving, an objective. In particular, means for carrying out a particular process step are all physical objects which a person skilled in the art would take into consideration in order to be able to carry out this process step. For example, a person skilled in the art will consider means of introducing or discharging a material stream to include any transporting and conveying apparatuses, i.e. for example pipelines, pumps, compressors, valves, which seem necessary or sensible to said skilled person for performance of this process step on the basis of such a person's knowledge of the art.

The recited solid, liquid and gaseous/vaporous states of matter should always be considered in relation to the local physical conditions prevailing in the respective process step or in the respective plant component unless otherwise stated. In the context of the present application the gaseous and vaporous states of matter should be considered to be synonymous.

Carbon-containing input streams or input materials of fossil origin are to be understood as meaning energy carriers or input materials, in particular carbon-containing input materials, formed in the geological past from decomposition products of dead plants and animals. These include brown coal, bituminous coal, peat, natural gas and crude oil. Continuing renewability through re-growth is thus not possible for input materials of fossil origin.

A crude synthesis gas or raw synthesis gas are to be understood as meaning gas mixtures comprising hydrogen and carbon oxides that are obtained as the direct product of a synthesis gas production step like gasification, partial oxidation, or reforming. Normally, such crude or raw synthesis gases are subjected to some cleaning, modification, conditioning step, with the aim to remove undesired constituents and/or to adjust the ratio of hydrogen to carbon oxides, before they are used further in some synthesis step, like methanol synthesis, ammonia synthesis, or else.

Pressures reported in the unit bara or bar(a) relate to absolute pressure in bar absolute. In contrast, pressures reported in the unit barg or bar(g) relate to gauge pressure.

The approach of the present invention is targeted specifically towards high CO₂ gases at high pressure with non-negligible NH₃ contents. The approach takes advantage of the different solubility of NH₃ and CO₂ as the synthesis gas stream is cooled. Water is condensed continuously throughout the cooling of the synthesis gas stream. NH₃ preferentially dissolves or condenses into the liquid phase during cooling, but at relatively high temperatures, above about 80 to 100 °C. Further condensation at lower temperatures then preferentially dissolves or condenses CO₂ into the liquid phase. With both ammonia and carbon dioxide present, the formation of ammonium salts with the carbonate and related ions is possible at sufficiently low temperatures where the solubility of the salt is lowest.

It is was realized that the higher temperature condensate, which contains most of the ammonia, need not be mixed with the lower temperature condensate, which contains the majority of the carbon dioxide. Thus the two condensate streams can be treated separately. For example, the high temperature condensate which contains ammonia could be recycled to the gasification process to manage pH value or could be purged from the system for stripping of ammonia. Alternatively, the high and low temperature condensates could be recombined after the risk of lower temperatures is avoided.

Furthermore, it was realized that such high-temperature and low-temperature condensates can be produced within the same equipment and then recombined after the risk of lower temperatures is avoided.

After cooling a raw synthesis gas in a first cooling zone by heat exchange to produce steam and pre-heat other process streams, the majority of the water is removed by further cooling down in a second cooling zone to less than about 50 °C by use of heat exchangers or coolers, for example air coolers or cooling water heat exchangers (both termed "coolers"). The lower temperature further condenses the process water for removal by vapor-liquid separation. Care must be taken to prevent overcooling of the process which could lead to the formation of solids.

The majority, for example more than 90 mol-%, of the ammonia present in the raw synthesis gas condenses with the water by about 100 °C. Further cooling down to 70 °C captures more than 99 mol-% of the ammonia that was originally present in the gas phase. To this point, in comparison, a relatively small portion of the carbon dioxide is captured in the liquid phase.

In one embodiment of the invention, multiple coolers are used for condensation. A first cooler in a first cooling zone condenses to the range of 70 to 100 °C, and the ammonia-laden condensate is separated from the crude synthesis gas stream. Then, in a second cooling zone downstream of the first cooling zone, the remaining synthesis gas stream is cooled further with a second cooler to collect additional condensate which will contain the majority of the carbon dioxide. The condensate from the first or second cooling zones can be recycled or treated separately, for example by stripping, to remove either ammonia or carbon dioxide from the system, respectively, and returning clean water to the quench, scrubbing or water-gas shift sections.

In a specific embodiment, in the case of air coolers being used in the cooling zones which can experience substantially colder ambient temperatures than cooling water coolers, with the ammonia removed in the condensate after the first cooling zone, in the second cooling zone the risk of ammonium salt formation would be avoided if the synthesis gas is exposed to lower temperatures.

### Preferred embodiments of the invention

In a second aspect of the invention the process is characterized in that the precooling zone is designed as a quench or as a waste heat boiler or as a combination of both. The design of the precooling zone will be, inter alia, be influenced by the soot or ash content of the raw synthesis gas, which depends on the specific gasification feedstocks used.

In a third aspect of the invention the process is characterized in that the first cooling zone and the second cooling zone are designed as air coolers or as cooling water cooler. Depending on the location of the gasification plant performing the process of the invention, the availability of cooling water, and economical considerations, either air coolers or as cooling water coolers might be used.

In a fourth aspect of the invention the process is characterized in that the first cooling zone and the second cooling zone are arranged in a common cooling device, wherein the first cooling zone and the second cooling zone are cooled with the same single cooler, preferably an air cooler. This aspect enables an intermediate condensate separation in a single cooling device in order to achieve the advantages of avoiding ammonium salt formation, while at the same time also minimizing the cost of equipment, since only a single cooler is required, and also saves space. This embodiment is particularly relevant for the case of air coolers which can experience ambient winter temperatures below that of cooling water coolers.

In a fifth aspect of the invention the process is characterized in that the first condensate stream and the second condensate stream are each fed separately to at least one processing step. In the embodiment of the invention related to this aspect, the first cooling zone is set to 70 to 100 °C to remove the majority of the ammonia from the gas stream into a first condensate stream. Then the remaining syngas is cooled further in a second cooling zone to collect a second condensate which will contain the majority of the carbon dioxide. The first condensate stream and second condensate stream are preferably worked up separately.

In a sixth aspect of the invention the process is characterized in that the first condensate stream and the second condensate stream are combined to form a mixed condensate stream and are jointly fed to at least one processing step, the temperature of the mixed condensate stream being at least 30 °C, preferably at least 40 °C. In this manner, the risk of a potential under-temperature in the second cooling zone is avoided and the first and second condensates can be combined for recycle or further processing.

In a seventh aspect of the invention the process is characterized in that the at least one processing step comprises a stripping step with a stripping gas stream and/or an inherent steam stream.

In an eighth aspect of the invention the process is characterized in that in the at least one processing step a gas stream containing carbon dioxide is recovered, which is at least partially recycled to process step 1. (c) as a component of the moderator stream or forms the moderator stream. In this manner, the emission of carbon dioxide is reduced, since at least a part of it is converted to synthesis gas products by passing the POX reactor again.

In a tenth aspect of the invention the plant is characterized in that the precooling zone is designed as a quench or as a waste heat boiler or as a combination of both. The advantages related to this aspect correspond to the second aspect of the invention.

In an eleventh aspect of the invention the plant is characterized in that the first cooling zone and the second cooling zone are designed as air coolers or as cooling water coolers. The advantages related to this aspect correspond to the third aspect of the invention.

In a twelfth aspect of the invention the plant is characterized in that the first cooling zone and the second cooling zone are arranged in a common cooling device, wherein the first cooling zone and the second cooling zone are cooled with the same single cooler, preferably an air cooler. This aspect enables an intermediate condensate separation in a single cooling device in order to achieve the advantages of avoiding ammonium salt formation, while at the same time also minimizing the cost of equipment, since only a single cooler is required, and also saves space. This embodiment is particularly relevant for the case of air coolers which can experience ambient winter temperatures below that of cooling water coolers.

In a thirteenth aspect of the invention the plant is characterized in that means are comprised to allow that the first condensate stream and the second condensate stream are each fed separately to at least one processing apparatus. The advantages related to this aspect correspond to the fifth aspect of the invention.

In a fourteenth aspect of the invention the plant is characterized in that means are comprised to allow that the first condensate stream and the second condensate stream are combined to form a mixed condensate stream and are jointly fed to at least one processing apparatus. The advantages related to this aspect correspond to the sixth aspect of the invention.

In a fifteenth aspect of the invention the plant is characterized in that the at least one processing apparatus is a stripping apparatus that is configured to carry out a stripping step with a stripping gas stream and/or an inherent steam stream. The advantages related to this aspect correspond to the seventh aspect of the invention.

In a sixteenth aspect of the invention the plant is characterized in that that means are comprised to allow that from the at least one processing apparatus, a gas stream containing carbon dioxide is recovered and at least partially recycled to the partial oxidation reactor as a component of the moderator stream or forms the moderator stream. The advantages related to this aspect correspond to the eighth aspect of the invention.

### Working example and embodiment

Developments, advantages and possible applications of the invention are also apparent from the following description of working and numerical examples and the drawings. All features described and/or depicted, either in themselves or in any combination, form the invention, regardless of the way they are combined in the claims or the back-references therein.

In the figures:
- Fig. 1: shows a process or plant according to a first embodiment of the invention,
- Fig. 2: shows a process or plant according to a second embodiment of the invention,
- Fig. 3: shows a process or plant according to a third embodiment of the invention.

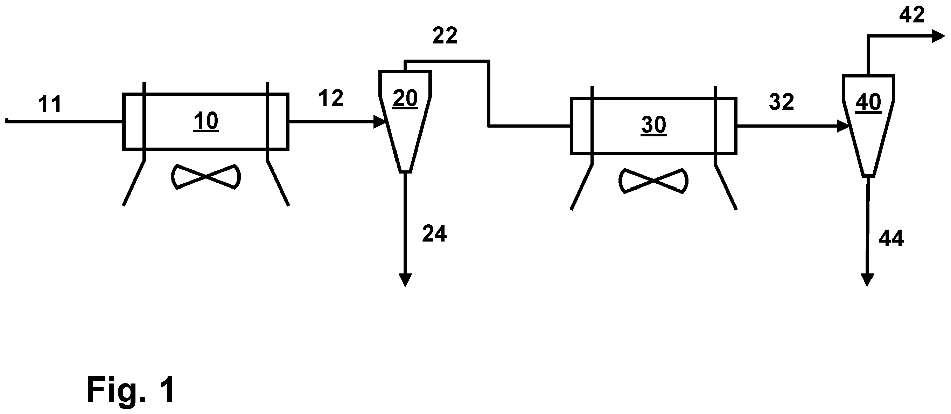

In the process or plant according to a first embodiment of the invention as shown in Fig. 1, a precooled crude synthesis gas stream is discharged from a reaction chamber of a POX reactor and a precooling zone (both not shown) via line 11. The precooled crude synthesis gas stream is introduced into a first cooling zone 10 equipped with a first air cooler, and cooled to a first gas temperature between and including 70 and 100 °C, preferably between and including 75 and 95 °C.

From the first cooling zone 10, a first cooled crude synthesis gas stream with a first gas temperature is discharged via line 12 and introduced into a first gas-liquid-phase separator 20. From the first gas-liquid-phase separator 20, a first condensate stream containing ammonia and/or ammonium compounds is discharged via line 24, and a first cooled crude synthesis gas stream with a first gas temperature, partially depleted in condensate, is discharged via line 22, and introduced into a second cooling zone 30 equipped with a second air cooler.

From the second cooling zone 30, a second cooled crude synthesis gas stream with a second gas temperature is discharged via line 32 and introduced into a second gas-liquid-phase separator 40. From the second gas-liquid-phase separator 40, a second condensate stream containing carbon dioxide is discharged via line 44, and a second cooled crude synthesis gas stream with a second gas temperature, further depleted in condensate, is discharged via line 42, and routed to at least one further purification, conditioning or processing step.

In the embodiment of the invention as shown in Fig. 1, the first gas temperature is between and including 70 and 100 °C, preferably between and including 75 and 95 °C, and the second gas temperature is below and including 70 °C, preferably below and including 50 °C.

The first and second condensate streams may be processed separately or in a common processing step (not shown).

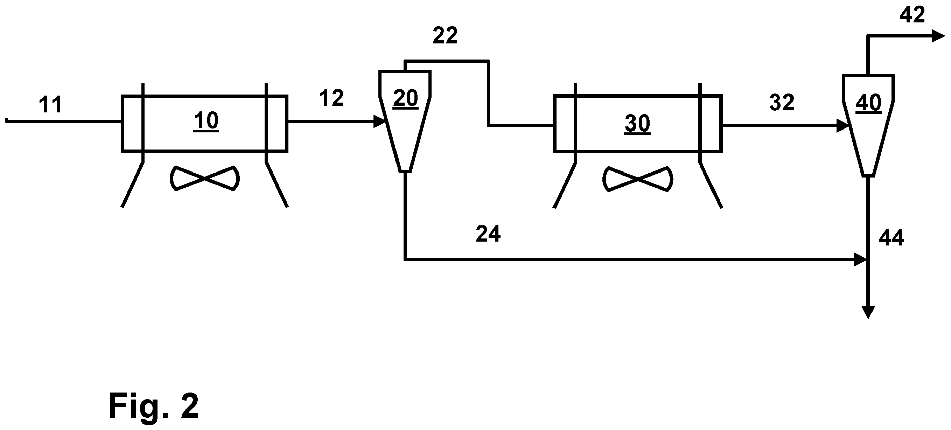

In the process or plant according to a second embodiment of the invention as shown in Fig. 2, all elements correspond to the corresponding elements shown in Fig. 1 labelled by the same reference numeral. However, line 24 is connected to line 44 so that the first and second condensate are combined to form a mixed condensate stream and are discharged from the process or plant as a common condensate stream.

In the embodiment of the invention as shown in Fig. 2, the first gas temperature is between and including 70 and 100 °C, preferably between and including 75 and 95 °C, and the second gas temperature is below and including 70 °C, preferably below and including 50 °C.

The first and second condensate streams are processed separately or in a common processing step (not shown).

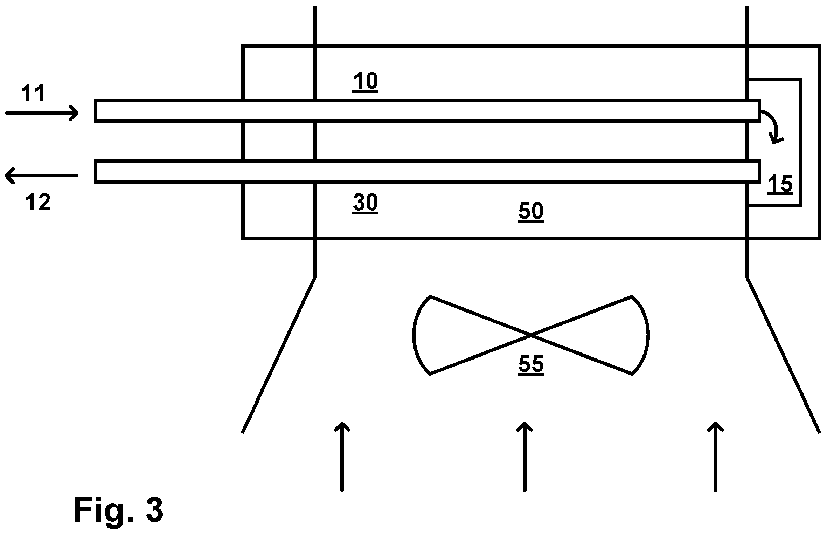

In the process or plant according to a third embodiment of the invention as shown in Fig. 3, a first cooling zone 10 and a second cooling zone 30 are comprised in a common cooling device 50. In this embodiment, the first cooling zone and the second cooling zone are cooled with common air cooler 55. Both the first cooling zone 10 and the second cooling zone 30 are realized as heat exchanger tubes, arranged in parallel in the common cooling device 50.

In Fig. 3, a precooled crude synthesis gas stream is discharged from a reaction chamber of a POX reactor and a precooling zone (both not shown) via line 11 (indicated as horizontal arrow). The precooled crude synthesis gas stream is introduced into the first cooling zone 10 and is cooled by a flow of cold air (indicated as perpendicular arrows) as provided by an air cooler 55.

In the first cooling zone 10, the precooled crude synthesis gas stream is cooled to a first gas temperature between and including 70 and 100 °C, preferably between and including 75 and 95 °C, and discharged into a connection chamber 15 as a first cooled crude synthesis gas stream with a first gas temperature which is partially depleted in condensate (first condensate separation not shown in Fig. 3). From the connection chamber 15, the first cooled crude synthesis gas stream is introduced into the heat exchanger tube of the second cooling zone 30 and passes through the second cooling zone 30.

From the second cooling zone 30, a second cooled crude synthesis gas stream with a second gas temperature, further depleted in condensate (second condensate separation not shown in Fig. 3) is discharged via line 12 (indicated as horizontal arrow).

The first and second condensate streams may be processed separately or in a common processing step (not shown).

In the embodiment of the invention as shown in Fig. 3, the first gas temperature is between and including 70 and 100 °C, preferably between and including 75 and 95 °C, and the second gas temperature is below and including 70 °C, preferably below and including 50 °C.

### Numerical example

The gas composition in Table 1 is used as an example for illustration purposes and represents a shifted synthesis gas.

**Table 1: Example Syngas Composition in vol.-%, saturated at ca. 184°C / 5500 kPa(g)**

| | |
|---|---|
| H₂ | 46.5 |
| CO | 0.8 |
| CO₂ | 27.6 |
| H₂O | 24.0 |
| NH₃ | 0.4 |
| Other | 0.8 |
| **Total** | **100.0** |

Table 2 shows the temperature of precipitation (solubility limit) of solid ammonium bicarbonate NH₄(HCO₃) as a function of the starting gas phase ammonia content. For this example, the hydrogen content shown in Table 1 was adjusted to compensate for the varying ammonia content. Temperatures below 0 °C were not considered because of the normal freezing point of water (labelled *).

**Table 2: Temperature of precipitation (solubility limit) of solid ammonium bicarbonate**

| NH3 in gas phase in mol-% | NH₄(HCO₃) precipitation temperature in °C |
|---|---|
| 0.2 | 0* |
| 0.5 | 0* |
| 0.6 | 0* |
| 0.7 | 3 |
| 1.0 | 12 |
| 1.75 | 22 |
| 2.5 | 26 |

On cooling the synthesis gas described in Table 1, the majority (more than 90 mol-%) of the ammonia present in the raw syngas condenses with the water by about 100°C. Further cooling down the synthesis gas to 70 °C captures more than 99 mol-% of the ammonia that was originally present in the gas phase. To this point, in comparison, a relatively small portion of the carbon dioxide is captured in the liquid phase. At 100 °C, about 90 mol-% of the ammonia is in the liquid phase, whereas less than 1.5% of the CO₂ partitions to the liquid phase. At 70 °C, more than 99 mol-% of the ammonia is in the liquid phase and less than about 2 mol-% of the CO₂ is captured.

Modifications to embodiments of the present disclosure described in the foregoing are possible without departing from the scope of the present disclosure as defined by the accompanying claims. Expressions such as "including", "comprising", "incorporating", "have", "is" used to describe, and claim the present disclosure are intended to be construed in a non-exclusive manner, namely allowing for items, components or elements not explicitly described also to be present. Reference to the singular is also to be construed to relate to the plural.

### List of reference numerals

- [10]: First cooling zone
- [11]: Line
- [12]: Line
- [15]: Connection chamber
- [20]: First gas-liquid phase separator
- [22]: Line
- [24]: Line
- [30]: Second cooling zone
- [32]: Line
- [40]: Second gas-liquid phase separator
- [42]: Line
- [44]: Line
- [50]: Common cooling device
- [55]: Air cooler (blower)

## Claims

1. Process for producing a crude synthesis gas containing hydrogen and carbon oxides by non-catalytic partial oxidation of a fluid or fluidizable feed stream containing carbon and nitrogen with an oxygen-containing oxidant in a non-catalytic partial oxidation (POX) reactor, comprising the following steps:
(a) Providing the feed stream in fluid or fluidized form, providing an oxidant stream, optionally providing a moderator stream comprising water vapor and/or carbon dioxide;
(b) providing a partial oxidation reactor comprising a reaction chamber having at least one inlet and one outlet, at least one burner disposed at the at least one inlet of the reaction chamber, and a precooling zone disposed downstream of and in fluid communication with the outlet of the reaction chamber;
(c) introducing the feed stream, the oxidant stream, and the optional moderator stream into the reaction chamber via the at least one burner;
(d) at least partially reacting the feed stream with the oxidant stream under partial oxidation conditions, at a pressure between and including 30 to 70 bara, preferably between and including 40 to 60 bara, in the burner and/or in the reaction chamber located downstream of the burner to form a hot crude synthesis gas stream comprising hydrogen, carbon monoxide, carbon dioxide and ammonia;
(e) discharging the hot crude synthesis gas stream from the reaction chamber and introducing it into the precooling zone, discharging a precooled crude synthesis gas stream from the precooling zone and from the partial oxidation reactor;
(f) introducing the precooled crude synthesis gas stream into a first cooling zone, discharging a first cooled crude synthesis gas stream having a first gas temperature and a first condensate stream containing ammonia and/or ammonium compounds from the first cooling zone;
(g) introducing the first cooled crude synthesis gas stream into a second cooling zone, discharging from the second cooling zone a second cooled crude synthesis gas stream having a second gas temperature and a second condensate stream containing carbon dioxide and/or carbonates;
(h) optionally feeding the second cooled crude synthesis gas stream to further purification, conditioning or processing steps;
(i) wherein the first gas temperature is between and including 70 and 100 °C, preferably between and including 75 and 95 °C, and wherein the second gas temperature is below and including 70 °C, preferably below and including 50 °C.

2. Process according to claim 1, **characterized in that** the precooling zone is designed as a quench or as a waste heat boiler or as a combination of both.

3. Process according to claim 1 or 2, **characterized in that** the first cooling zone and the second cooling zone are designed as air coolers or as cooling water cooler.

4. Process according to claim 1 or 2, **characterized in that** the first cooling zone and the second cooling zone are arranged in a common cooling device, wherein the first cooling zone and the second cooling zone are cooled with the same single cooler, preferably an air cooler.

5. Process according to any one of the preceding claims, **characterized in that** the first condensate stream and the second condensate stream are each fed separately to at least one processing step.

6. Process according to any one of the preceding claims, **characterized in that** the first condensate stream and the second condensate stream are combined to form a mixed condensate stream and are jointly fed to at least one processing step, the temperature of the mixed condensate stream being at least 30 °C, preferably at least 40 °C.

7. Process according to claim 5 or 6, **characterized in that** the at least one processing step comprises a stripping step with a stripping gas stream and/or an inherent steam stream.

8. Process according to any one of claims 5 to 7, **characterized in that** in the at least one processing step a gas stream containing carbon dioxide is recovered, which is at least partially recycled to process step 1. (c) as a component of the moderator stream or forms the moderator stream.

9. Plant for producing a crude synthesis gas containing hydrogen and carbon oxides by non-catalytic partial oxidation of a fluid or fluidizable feed stream containing carbon and nitrogen with an oxygen-containing oxidant in a non-catalytic partial oxidation (POX) reactor, comprising the following means, devices and building blocks which are in fluid connection to each other:
(a) Means for providing the feed stream in fluid or fluidized form, means for providing an oxidant stream, optionally means for providing a moderator stream comprising water vapor and/or carbon dioxide;
(b) a partial oxidation reactor comprising a reaction chamber having at least one inlet and one outlet, at least one burner disposed at the at least one inlet of the reaction chamber, and a precooling zone disposed downstream of and in fluid communication with the outlet of the reaction chamber;
(c) means for introducing the feed stream, the oxidant stream, and the optional moderator stream into the reaction chamber via the at least one burner;
(d) means for discharging a hot crude synthesis gas stream from the reaction chamber and introducing it into the precooling zone, means for discharging a precooled crude synthesis gas stream from the precooling zone and from the partial oxidation reactor;
(e) a first cooling zone, means for introducing the precooled crude synthesis gas stream into the first cooling zone, means for discharging a first cooled crude synthesis gas stream having a first gas temperature and a first condensate stream containing ammonia and/or ammonium compounds from the first cooling zone;
(f) a second cooling zone, means for introducing the first cooled crude synthesis gas stream into the second cooling zone, means for discharging from the second cooling zone a second cooled crude synthesis gas stream having a second gas temperature and a second condensate stream containing carbon dioxide and/or carbonates;
(g) optionally, at least one further purification, conditioning or processing apparatus, means for feeding the second cooled crude synthesis gas stream to the at least one further purification, conditioning or processing apparatus;
(h) wherein the first cooling zone and the second cooling zone are configured to allow adjustment of the first gas temperature between and including 70 and 100 °C, preferably between and including 75 and 95 °C, and to allow adjustment of the second gas temperature below 70 °C, preferably below 50 °C.

10. Plant according to claim 9, **characterized in that** the precooling zone is designed as a quench or as a waste heat boiler or as a combination of both.

11. Plant according to claim 9 or 10, **characterized in that** the first cooling zone and the second cooling zone are designed as air coolers or as cooling water cooler.

12. Plant according to claim 9 or 10, **characterized in that** the first cooling zone and the second cooling zone are arranged in a common cooling device, wherein the first cooling zone and the second cooling zone are cooled with the same single cooler, preferably an air cooler.

13. Plant according to any one of claims 9 to 12, **characterized in that** means are comprised to allow that the first condensate stream and the second condensate stream are each fed separately to at least one processing apparatus.

14. Plant according to any one of claims 9 to 13, **characterized in that** means are comprised to allow that the first condensate stream and the second condensate stream are combined to form a mixed condensate stream and are jointly fed to at least one processing apparatus.

15. Plant according to any one of claim 9 to 14, **characterized in that** the at least one processing apparatus is a stripping apparatus that is configured to carry out a stripping step with a stripping gas stream and/or an inherent steam stream.

16. Plant according to any one of claim 9 to 15, **characterized in that** means are comprised to allow that from the at least one processing apparatus, a gas stream containing carbon dioxide is recovered and at least partially recycled to the partial oxidation reactor as a component of the moderator stream or forms the moderator stream.
